# EUROPÄISCHE PATENTSCHRIFT

(11) **EP 2 564 739 B1**
(45) Veröffentlichungstag und Bekanntmachung des Hinweises auf die Patenterteilung: **15.04.2015**
(21) Anmeldenummer: 12401160.2
(22) Anmeldetag: 19.07.2012
(51) Int. Cl.: A47J 31/44

(54) **Getränkebereiter**
Drink preparer
Préparateur de boissons

(30) Priorität: 02.09.2011 DE 102011053221
(43) Veröffentlichungstag der Anmeldung: 06.03.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 0 791 321
- EP-A1- 2 208 452
- WO-A1-2012/031593

## Beschreibung

Die Erfindung betrifft einen Getränkebereiter zur Ausgabe von Kaffee, Milch und/oder Milchschaum über eine Auslaufeinheit mit einer unterhalb der Auslaufeinheit angeordneten Abstellfläche für ein Gefäß mit einer Abtropfschale sowie einem Abtropfgitter sowie einer Milchleitung zur Verbindung des Milchaufschäumers/Milchverteilers mit einem Milchbehälter sowie mindestens einer Aufnahme für die Milchleitung.

Bei den aus dem Stand der Technik bekannten Getränkebereitern kann Milch in einer Verkaufsverpackung neben den Getränkebereiter gestellt werden. Die Milch wird über eine Milchleitung, die in die Verkaufsverpackung gelegt wird, in das Gerät gesaugt. Die Verkaufsverpackung bildet dann einen Behälter, der jedoch nicht Teil des Getränkebereiters ist. Alternativ weisen andere Getränkebereiter einen eigenen Behälter auf, der ebenfalls manuell mit einer Leitung verbunden wird. Die Milchleitung wird verwendet, um Milch zur Herstellung von Getränken aus Milch oder Milch enthaltende Getränke anzusaugen. Die Milch wird dem in der Auslaufeinheit entnehmbar angeordneten Milchaufschäumer/Milchverteiler zugeführt, zum Beispiel zum Erhitzen und/oder zum Aufschäumen. Die Milchleitung sollte nach der Ausgabe eines milchhaltigen Getränks gespült werden. Bei bekannten Geräten wird der Benutzer über eine Displayanzeige aufgefordert, das milchbehälterseitige Ende der Milchleitung in eine Aufnahme in der Abtropfschale zu stecken und den Spülprozess zu starten. Die Milchleitung wird dann mit Heißwasser gespül, welches direkt in die Abtropfschale eingeleitet wird. Die Aufnahme für die Milchleitung ist bei bekannten Geräten als in der Abtropfschale integrierter Aufnahmestutzen ausgebildet.

Die EP 0 791 321 A1 offenbart einen Getränkebereiter zur Ausgabe von Kaffee, Milch und/oder Milchschaum über eine Auslaufeinheit, mit einer unterhalb der Auslaufeinheit angeordneten Abstellfläche (tray) für ein Gefäß mit einer Abtropfschale sowie einem Abtropfgitter sowie einer Milchleitung zur Verbindung des Milchaufschäumers / Milchverteilers mit einem Milchbehälter. Für den Reinigungsprozess der Milchleitung ist es vorgesehen, das freie Ende auf der Abstellfläche zu legen, damit die Spülflüssigkeit in die Auffangschale gelangen kann.

Der Erfindung stellt sich das Problem, die Befestigung der Milchleitung für den Spülprozess zu optimieren.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Milchleitung in einer Aufnahme im Abtropfgitter fixiert werden kann. Es ist besonders vorteilhaft, dass durch die Anordnung der Aufnahme im Abtropfgitter ein Aufnahmestutzen in der Abtropfschale entfallen kann.

Ein Ausführungsbeispiel der Erfindung ist in den Zeichnungen rein schematisch dargestellt und wird nachfolgend näher beschrieben. Es zeigt
- Figur 1: Eine Ansicht eines Getränkebereiters,
- Figur 2: schematisch die Auslaufeinheit am Gerät mit einer Schnittdarstellung des Milchaufschäumers/Milchverteilers sowie die in der Aufnahme fixierte Milchleitung,
- Figur 3: die Aufnahme im Abtropfgitter als Einzelheit,

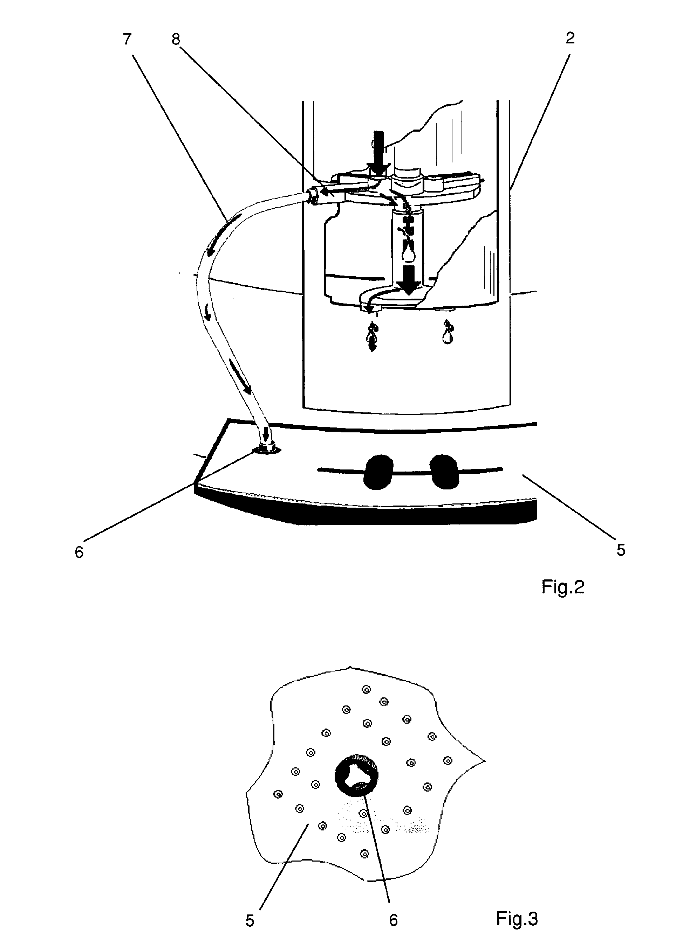

- Figur 3: die Aufnahme als Einzelheit.

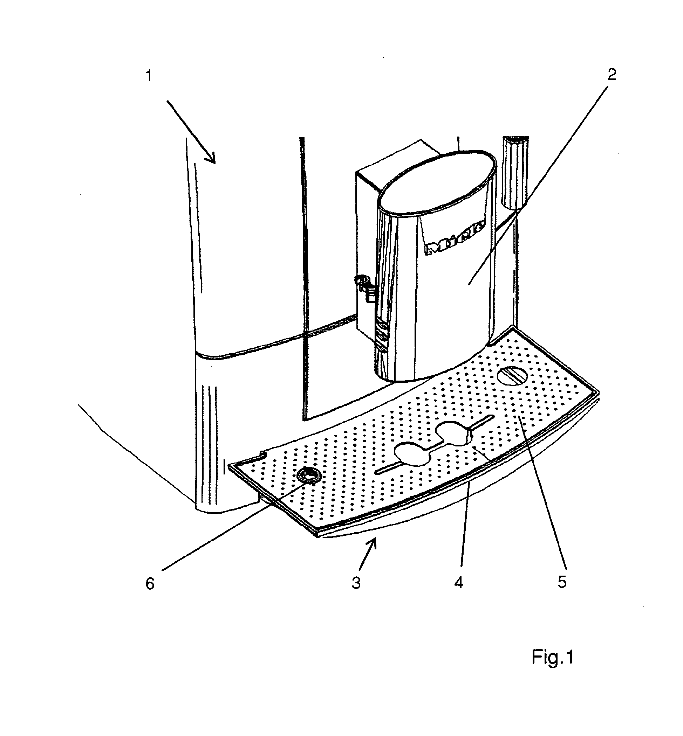

In der Figur 1 ist ein Getränkebereiter 1 zur Ausgabe von Kaffee, Milch und/oder Milchschaum über eine Auslaufeinheit 2 gezeigt. Unter der Auslaufeinheit 2 ist eine Abstellfläche 3 für ein Gefäß angeordnet. Die Abstellfläche 3 weist eine Abtropfschale 4 mit einem darauf angeordneten Abtropfgitter 5 auf. In dem Abtropfgitter 5 ist eine Aufnahme 6 angeordnet, in der die Milchleitung 7 (siehe Figur 2) in einer Reinigungsposition durchspült werden kann.

Figur 2 zeigt schematisch die Auslaufeinheit 2 am Gerät mit einer Schnittdarstellung des Milchaufschäumers/Milchverteilers 8 sowie die daran angeschlossene Milchleitung 7, die in einer Reinigungsposition dargestellt ist. Für einen Spülvorgang mit heißem Wasser wird das milchbehälterseitige Ende der Milchleitung 7 in die Aufnahme 6 im Abtropfgitter 5 eingesteckt und für den Spülvorgang fixiert.

Figur 3 zeigt die Aufnahme 6 im Abtropfgitter als Einzelheit. Die Aufnahme 6 ist als Klemmstopfen ausgebildet, welcher in einer Bohrung im Abtropfgitter 5 aufgenommen ist.

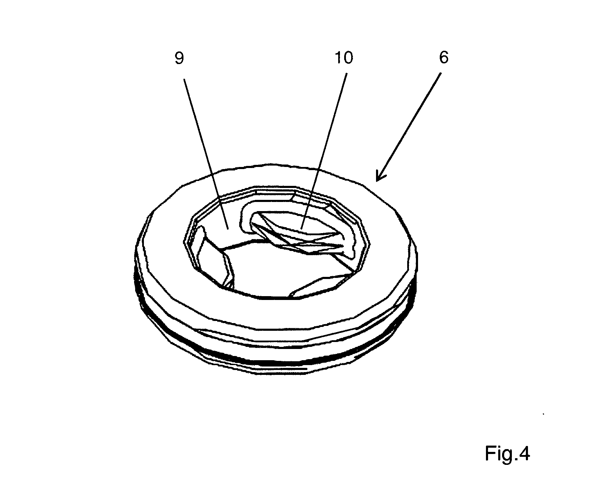

Figur 4 zeigt den Klemmstopfen bzw. die Aufnahme 6 als Einzelheit. Der Klemmstopfen weist eine Durchgangsbohrung 9 auf, wobei in die Bohrung hineinragende Klemmelemente 10 die Milchleitung in der Reinigungsposition fixieren.

## Patentansprüche

1. Getränkebereiter (1) zur Ausgabe von Kaffee, Milch und/oder Milchschaum über eine Auslaufeinheit (2), mit einer unterhalb der Auslaufeinheit (2) angeordneten Abstellfläche (3) für ein Gefäß mit einer Abtropfschale (4) sowie einem Abtropfgitter (5) sowie einer Milchleitung (7) zur Verbindung des Milchaufschäumers/Milchverteilers (6) mit einem Milchbehälter (7) sowie mindestens einer Aufnahme (6) für die Milchleitung (7),
**dadurch gekennzeichnet,**
**dass** die Aufnahme (6) für das Einstecken und die Fixierung des milchbehälterseitigen Endes der Milchleitung (7) als Klemmstopfen ausgebildet und in einer Bohrung des Abtropfgitters (5) angeordnet ist.

2. Getränkebereiter nach Anspruch 1,
**dadurch gekennzeichnet,**
**dass** der Klemmstopfen mit innenliegenden Klemmelementen (10) für die Milchleitung (7) ausgebildet ist.

3. Getränkebereiter nach Anspruch 2,
**dadurch gekennzeichnet,**
**dass** der Klemmstopfen eine Durchgangsbohrung (9) mit in die Bohrung (9) hineinragenden Klemmelementen (10) aufweist, um die Milchleitung (7) in der Reinigungsposition zu fixieren.

## Claims

1. Beverage preparation means (1) for dispensing coffee, milk and/or milk foam via an outlet unit (2), comprising a placement surface (3), arranged beneath the outlet unit (2), for a vessel, said placement surface having a drip tray (4) and a drip-tray grille (5), and comprising a milk line (7) for connecting the milk foamer/milk dispenser (6) to a milk container (7) and comprising at least one receiving portion (6) for the milk line (7),
**characterised in that**
the receiving portion (6) for inserting and fixing the milk-container-side end of the milk line (7) is formed as a clamping stopper and is arranged in a hole in the drip-tray grille (5).

2. Beverage preparation means according to claim 1,
**characterised in that**
the clamping stopper is formed so as to have internal clamping elements (10) for the milk line (7).

3. Beverage preparation means according to claim 2,
**characterised in that**
the clamping stopper comprises a through-hole (9) having clamping elements (10) which project into the opening (9) in order to fix the milk line (7) in the cleaning position.

## Revendications

1. Préparateur de boissons (10) pour la distribution de café, de lait et/ou de mousse de lait par le biais d'une unité de sortie (2), avec une surface de dépose (3) pour un récipient disposée au-dessous de l'unité de sortie (2) avec un bac d'égouttage (4) ainsi qu'avec une grille d'égouttage (5) ainsi qu'une conduite de lait (7) pour le raccordement du mousseur à lait/répartiteur de lait (6) à un réservoir de lait (7) ainsi qu'avec au moins un logement (6) pour la conduite de lait (7),
**caractérisé en ce que**
le logement (6) pour l'enfichage et la fixation de l'extrémité côté réservoir de lait de la conduite de lait (7) est constitué en tant que bouchon de serrage et est disposé dans un alésage de la grille d'égouttage (5).

2. Préparateur de boissons selon la revendication 1,
**caractérisé en ce que**
le bouchon de serrage est constitué avec des éléments de serrage (10) pour la conduite de lait (7) qui sont situés à l'intérieur.

3. Préparateur de boissons selon la revendication 2,
**caractérisé en ce que**
le bouchon de serrage présente un alésage de traversée (9) avec des éléments de serrage (10) faisant saillie dans l'alésage (9) pour fixer la conduite de lait (7) dans la position de nettoyage.
